# EUROPEAN PATENT SPECIFICATION

(11) **EP 4 009 155 B1**
(45) Date of publication and mention of the grant of the patent: **27.09.2023**
(21) Application number: 21208464.4
(22) Date of filing: 16.11.2021
(51) Int. Cl.: G06F 3/04842, G06F 3/04845

(54) **DISPLAY CONTROL APPARATUS, METHOD, AND PROGRAM**
ANZEIGESTEUERUNGSVORRICHTUNG, -VERFAHREN UND -PROGRAMM
APPAREIL, PROCÉDÉ ET PROGRAMME DE COMMANDE D'AFFICHAGE

(30) Priority: 07.12.2020 JP 2020202638
(43) Date of publication of application: 08.06.2022
(73) Proprietor: Yokogawa Electric Corporation, Musashino-shi Tokyo 180-8750 (JP)
(72) Inventor: Akisada, Yukiyo, Musashino-shi, Tokyo (JP); Sakurai, Yasuki, Musashino-shi, Tokyo (JP)
(74) Representative: Grünecker Patent- und Rechtsanwälte PartG mbB

(56) References cited:
- US-A1- 2011 298 702
- US-A1- 2017 344 108
- US-A1- 2020 371 673
- TOET ET AL: "Gaze directed displays as an enabling technology for attention aware systems", COMPUTERS IN HUMAN BEHAVIOR, PERGAMON, NEW YORK, NY, US, vol. 22, no. 4, 1 July 2006 (2006-07-01), pages 615-647, XP028003423, ISSN: 0747-5632, DOI: 10.1016/J.CHB.2005.12.010 [retrieved on 2006-07-01]

## Description

### BACKGROUND

### 1. TECHNICAL FIELD

The present invention relates to an apparatus, a method, and a program.

### 2. RELATED ART

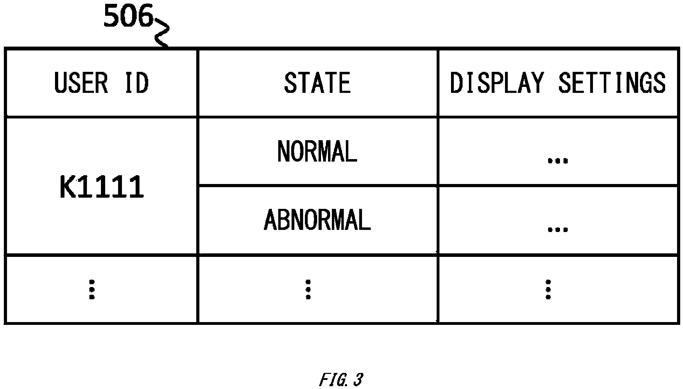

PTL 1 describes that "when a user pays attention to a window A for a predetermined amount of time or more, as shown in FIG. 3, the window A is enlarged and displayed".
US 2011/0298702 A1 discloses a user interface device that estimates a user's degree of interest, for performing an input process on the basis of the user's degree of interest in a plurality of objects displayed on a screen.
US 2020/0371673 A1 publishes improvements over existing systems by allowing users to efficiently modify an arrangement of a user interface of a communication session by the use of an eye gaze gesture.
Toet et al.: "Gaze directed displays as an enabling technology for attention aware systems", 1 July 2006, pages 615-647 discloses that visual information can in principle be dynamically optimized by monitoring the user's state of attention, e.g. by tracking eye movements.
US 2017/0344108 A1 publishes systems, methods, and computer program products to perform an operation to enhance readability of on-screen objects.

### [Prior Art Document]

### [Patent Document]

[PTL 1] Japanese Patent No. 2010-23788

### [GENERAL DISCLOSURE]

### SUMMARY

In a first aspect of the present invention, an apparatus is provided. The apparatus includes a display control unit configured to display a display screen based on default display settings. The apparatus includes a detection unit configured to detect a region viewed by a user within the display screen. The apparatus includes a determining unit configured to determine a degree of attention of each region within the display screen based on a detection result by the detection unit. The apparatus includes a generating unit configured to generate update display settings different from the default display settings based on a determination result by the determining unit. The apparatus includes an updating unit configured to change the default display settings to the update display settings and cause the display control unit to update the display screen in response to input of an update command by the user.

The apparatus includes a judging unit configured to judge a state of a plant. The apparatus includes a storage unit configured to store the default display settings for each state of the plant. Each time the state of the plant changes, the display control unit displays the display screen based on the default display settings corresponding to the state after changing.

The determining unit may determine, for each state of the plant, the degree of attention of each region within the display screen of the default display settings corresponding to said state. The generating unit may generate the update display settings corresponding to a current state of the plant based on the degree of attention of each region within the display screen of the default display settings corresponding to said state. The updating unit may set the update display settings as the default display settings corresponding to the current state of the plant in response to the input of the update command.

The judging unit may judge whether the plant is in a normal state or an abnormal state. When the current state of the plant is in the normal state, the generating unit may generate the update display settings corresponding to the normal state based on the degree of attention of each region within the display screen of the default display settings corresponding to the normal state and the degree of attention of each region within the display screen of the default display settings corresponding to the abnormal state.

The generating unit may generate the update display settings corresponding to the normal state, so that visibility of data displayed in a region with a higher degree of attention than a reference within the display screen of the default display settings corresponding to the abnormal state, by changing at least one of a display position, display color, brightness, or display size of a display region of said data; or character modification, display color, or display size of text of said data.

The judging unit may judge that the plant is in the abnormal state in response to generation of an alert signal within the plant.

The apparatus may include an identifying unit configured to identify, among a plurality of users, a current user who is currently using said apparatus. The apparatus may include a storage unit configured to store the default display settings for each of the users. Each time the current user is changed, the display control unit may display the display screen based on the default display settings corresponding to the current user after changing.

The determining unit may determine, for each user, the degree of attention of each region within the display screen of the default display settings corresponding to said user. The generating unit may generate the update display settings corresponding to the current user based on the degree of attention of each region within the display screen of the default display settings corresponding to said current user. The updating unit may set the update display settings as the default display settings corresponding to the current user in response to the input of the update command.

When the current user is a first user, the generating unit may generate the update display settings corresponding to said first user based on the degree of attention of each region within the display screen of the default display settings corresponding to said first user and the degree of attention of each region within the display screen of the default display settings corresponding to a second user.

When the current user is the first user, the generating unit may generate the update display settings corresponding to the first user, so that visibility of data displayed in a region with a higher degree of attention than a reference within the display screen of the default display settings corresponding to the second user, by changing at least one of a display position, display color, brightness, or display size of a display region of said data; or character modification, display color, or display size of text of said data.

The apparatus may include an image capturing unit configured to image-capture an eye of the user. The identifying unit may identify the current user by iris recognition of the eye that has been image-captured by the image capturing unit.

The apparatus may include an input unit configured to receive input of authentication information from a user. The identifying unit may identify the current user based on the authentication information.

The generating unit may generate the update display settings, so that visibility of data displayed in a region with a high degree of attention increases, by changing at least one of a display position, display color, brightness, or display size of a display region of said data; or character modification, display color, or display size of text of said data.

The determining unit may further determine a degree of relevance between regions within the display screen based on the detection result by the detection unit. The generating unit may generate the update display settings by associating regions with a high degree of relevance with each other.

The updating unit may display the display screen based on the update display settings and a message for selecting whether to perform an update of the display screen. The updating unit may, in response to selection to perform the update, change the default display settings to the update display settings and cause the display control unit to update the display screen.

In a second aspect of the present invention, a method is provided. The method includes a display controlling step of displaying a display screen based on default display settings. The method includes a detection step of detecting a region viewed by a user within the display screen. The method includes a determining step of determining a degree of attention of each region within the display screen based on a detection result by the detection step. The method includes a generating step of generating update display settings different from the default display settings based on a determination result by the determining step. The method includes an updating step of changing the default display settings to the update display settings and causing the display controlling step to update the display screen in response to input of an update command by a user.

In a third aspect of the present invention, a program is provided. The program causes a computer to function as a display control unit configured to display a display screen based on default display settings. The program causes a computer to function as a detection unit configured to detect a region viewed by a user within the display screen. The program causes a computer to function as a determining unit configured to determine a degree of attention of each region within the display screen based on a detection result by the detection unit. The program causes a computer to function as a generating unit configured to generate update display settings different from the default display settings based on a determination result by the determining unit. The program causes a computer to function as an updating unit configured to change the default display settings to the update display settings and cause the display control unit to update the display screen in response to input of an update command by the user.

The summary clause does not necessarily describe all necessary features of the embodiments of the present invention. The present invention may also be a sub-combination of the features described above. The scope of the invention is set out by the appended claims.

### BRIEF DESCRIPTION OF THE DRAWINGS

FIG. 1 shows a maintenance management system 1 according to the present embodiment.
FIG. 2 shows an interface apparatus 5.
FIG. 3 shows a data structure of a storage unit 506.
FIG. 4 shows a data structure of data stored by a determining unit 510.
FIG. 5 shows an operation of the interface apparatus 5.
FIG. 6 shows an example of a computer 2200 in which the plurality of aspects of the
present invention may be fully or partially embodied.

### DESCRIPTION OF EXEMPLARY EMBODIMENTS

Hereinafter, the present invention will be described through embodiments of the invention, but the following embodiments do not limit the inventions that fall within the scope of the claims. In addition, not all combinations of features described in the embodiments are essential to the means of solving the invention.

### [1. Configuration of maintenance management system 1]

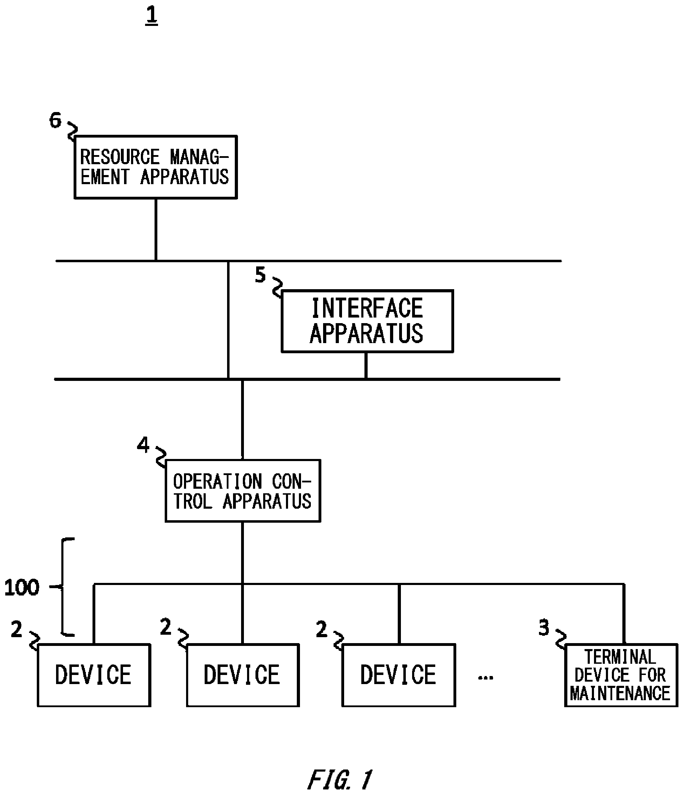

FIG. 1 shows a maintenance management system 1 according to the present embodiment. The maintenance management system 1 manages maintenance of a plant, and includes a plurality of devices 2, a terminal device for maintenance 3, an operation control apparatus 4, an interface apparatus 5, and a resource management apparatus 6.

Here, as plants, in addition to industrial plants such as chemical plants, there are plants that manage and control wells such as gas fields and oil fields and their surroundings; plants that manage and control power generation such as hydropower, thermal power, and nuclear power; plants that manage and control environmental power generation such as solar power and wind power, and plants that manage and control water supply, sewerage, and dams. Each of the devices 2 and the terminal device for maintenance 3 may be disposed at the site where processes are conducted in the plant. For example, at the site, there are pipes through which fluid to be measured flows and a flow meter installed in the pipe to measure the flow rate of the fluid. The operation control apparatus 4, the interface apparatus 5, and the resource management apparatus 6 may be disposed in a management center of the plant.

### [1-1. Devices 2]

The plurality of devices 2 are appliances, machines, or apparatuses, and for example, they may be sensors that measure physical quantities such as pressure, temperature, pH, speed, and flow rate in a plant process; valves that control any of the physical quantities; and actuators such as diversion control valves, on-off valves, pumps, fans, motors, heating devices, and cooling devices, may be acoustic devices that collect abnormal sounds in the plant or emit alarm sounds such as microphones and speakers, may be position detection devices that output position information of each device, may be pipes through which fluid flows, and may be other devices. Each of the devices 2 in the plurality of devices 2 may be different from each other, or at least a part of two or more of the devices 2 may be of the same type.

Each of the devices 2 may be connected to the operation control apparatus 4 by wire or wirelessly via a control network 100. The communication within the control network 100 may be digital communication or hybrid communication in which a digital signal is superimposed on an analog signal (4 to 20 mA signal or the like), and may be at a speed of about 1,000 bps to 10,000 bps (for example, 1,200 bps, 2,400 bps). Communication within the control network 100 may be performed by, for example, a wireless communication protocol of ISA (International Society of Automation), and as an example, ISA100, HART (Highway Addressable Remote Transducer) (registered trademark), BRAIN (registered trademark), FOUNDATION Fieldbus, or PROFIBUS may be used.

Each of the devices 2 may have unique identification information (also referred to as device-specific information). The device-specific information is information for uniquely identifying the device. In the present embodiment, as an example, it may be at least one of a serial number assigned to the device 2 by the communication protocol (for example, HART), a serial number set by the manufacturer of the device 2, or a device ID.

### [1-2. Terminal device for maintenance 3]

The terminal device for maintenance 3 accesses configuration parameters of the devices 2, and refers to, sets, and changes the values of the configuration parameters. The terminal device for maintenance 3 may be a handheld terminal (HHT) carried by a field worker (for example, a smartphone or a tablet PC), and may be a stationary PC. When the terminal device for maintenance 3 is a handheld terminal, the terminal device for maintenance 3 may be detachably connected to the devices 2.

### [1-3. Operation control apparatus 4]

The operation control apparatus 4 communicates with each of the devices 2 and controls processes. For example, the operation control apparatus 4 obtains a process value that is measurement data from the device 2 that is a sensor, and drives the device 2 that is an actuator. Then, the operation control apparatus 4 may supply the process value to the interface apparatus 5 and receive a target value of the process value from the interface apparatus 5. The operation control apparatus 4 may output an alert signal to the interface apparatus 5 and the resource management apparatus 6 in response to the process value becoming out of a permissible range. It is noted that in the present embodiment, as an example, the maintenance management system 1 is described to be provided with one operation control apparatus 4 that controls all of the devices 2, but it may be provided with a plurality of operation control apparatuses 4 and each may control a part of the devices 2 in a distributed manner. The operation control apparatus 4 may be an FCS (Field Control Station) as an example.

### [1-4. Interface apparatus 5]

The interface apparatus 5 is an example of an apparatus, and displays various types of data in the plant on a display screen and interfaces between a manager and the plant. The interface apparatus 5 may control processes of the plant via the operation control apparatus 4 according to operations by the manager. For example, the interface apparatus 5 may receive the process value from the operation control apparatus 4 and supply the target value of the process value to the operation control apparatus 4. In addition, the interface apparatus 5 may change the values of the configuration parameters of the devices 2 via the operation control apparatus 4. In addition, the interface apparatus 5 may store, in association with at least a part of the devices 2, the values of the configuration parameters of said devices 2. The interface apparatus 5 may be an HIS (Human Interface Station) as an example, and may be configured by a PC.

### [1-5. Resource management apparatus 6]

The resource management apparatus 6 performs online monitoring and centralized management of the plant. For example, the resource management apparatus 6 may manage information (for example, values of the configuration parameters or process values) of the devices 2 obtained by the operation control apparatus 4. The resource management apparatus 6 may output an alert signal to the interface apparatus 5 when the process value is out of a permissible range. The resource management apparatus 6 may be configured by a PC as an example.

### [2. Interface apparatus 5]

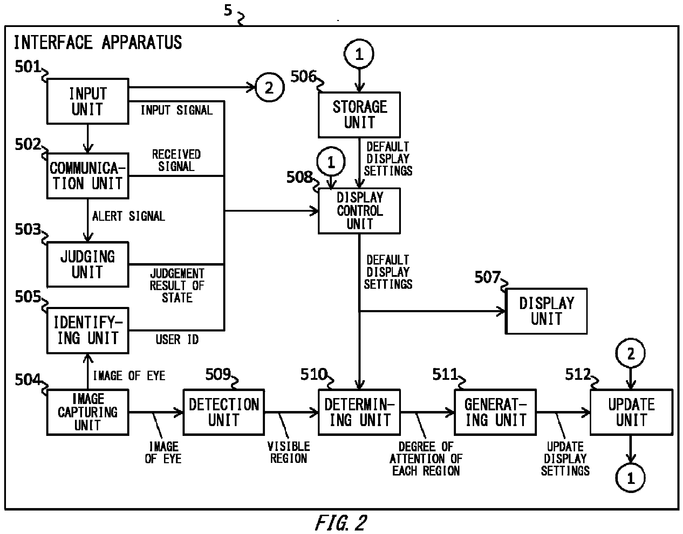

FIG. 2 shows the interface apparatus 5. The interface apparatus 5 includes an input unit 501, a communication unit 502, a judging unit 503, an image capturing unit 504, an identifying unit 505, a storage unit 506, a display unit 507, a display control unit 508, a detection unit 509, a determining unit 510, a generating unit 511, and an updating unit 512.

### [2-1. Input unit 501]

The input unit 501 receives input from a user. For example, the target value of the process value may be input to the input unit 501. The input unit 501 may supply input contents to the display control unit 508 and the communication unit 502.

### [2-2. Communication unit 502]

The communication unit 502 wirelessly communicates with the operation control apparatus 4, the resource management apparatus 6, and the like. The communication unit 502 may supply received data (process values or configuration parameter values as an example) to the display control unit 508 and display it on the display unit 507. In addition, the communication unit 502 may receive the alert signal generated in the plant from the operation control apparatus 4 and the resource management apparatus 6 and supply the alert signal to the judging unit 503. In addition, the communication unit 502 may transmit the input contents of the input unit 501 to the operation control apparatus 4 and the resource management apparatus 6.

### [2-3. Judging unit 503]

The judging unit 503 judges a state of the plant. The judging unit 503 may judge the plant as being in any of a plurality of states, and as an example in the present embodiment, judges whether the plant is in a normal state or an abnormal state.

The judging unit 503 may judge that the plant is in the abnormal state in response to the occurrence of the alert signal in the plant. As an example in the present embodiment, the judging unit 503 may judge that the plant is in the abnormal state in response to receiving the alert signal from the operation control apparatus 4 and the resource management apparatus 6 via the communication unit 502. It is noted that the judging unit 503 may judge whether the process value received via the communication unit 502 is out of the permissible range, and judge that the plant is in the abnormal state in response to the process value being out of the permissible range. The judging unit 503 may supply the judgement result to the display control unit 508.

### [2-4. Image capturing unit 504]

The image capturing unit 504 image-captures the user's eyes. The image capturing unit 504 may supply a captured eye image to the identifying unit 505 and the detection unit 509. It is noted that as an example in the present embodiment, the image capturing unit 504 is provided on an outer peripheral portion of the display screen of the display unit 507, but it may be provided at another position.

### [2-5. Identifying unit 505]

The identifying unit 505 identifies a current user who is currently using the interface apparatus 5 among a plurality of users. The current user may be a user facing the display screen, and the identifying unit 505 may identify the current user by iris recognition of eyes image-captured by the image capturing unit 504. In the present embodiment, as an example, the current user may be identified by collating the iris pattern of the captured image with the iris pattern of identification data of each user stored in advance by the identifying unit 505. The identifying unit 505 may supply the identification information (also referred to as a user ID) of the identified current user to the display control unit 508.

### [2-6. Storage unit 506]

The storage unit 506 stores default display settings of the display unit 507. The storage unit 506 stores the default display settings for each state of the plant (for each of the normal state and the abnormal state as an example in the present embodiment). In addition, the storage unit 506 may store default display settings for each user. The default display settings corresponding to different states of the plant may be different or the same as each other. In addition, the default display settings corresponding to different users may be different or the same as each other.

Here, the display settings may be at least one of display position, display color, brightness, or display size of each display region provided within the display screen; or type of data, character modification, display color, or display size of text displayed within the display region. The display color of the region may be background color or color of the frame surrounding the region. The character modification of text may be bold, underlined, marker (also referred to as highlight), or shading.

The default display settings may be display settings preset before operation of the apparatus. As an example, the default display settings may be those that are applied after the user logs in. When a plurality of default display settings are stored in the storage unit 506, the plurality of default display settings may display different display screens from each other.

### [2-7. Display unit 507]

The display unit 507 displays a display screen according to the display settings. The display screen may be provided with a plurality of display regions (as an example, windows) in which a plurality of types of data different from each other are displayed. The display unit 507 may be controlled by the display control unit 508, and for example, various types of data (as an example, process values and configuration parameter values) within the plant supplied via the display control unit 508 are displayed within the display screen.

### [2-8. Display control unit 508]

The display control unit 508 displays the display screen based on the default display settings. The display control unit 508 may read, from the storage unit 506, the judgement result of the state of the plant by the judging unit 503 and the default display settings corresponding to the user ID of the current user identified by the identifying unit 505, and display them on the display screen. For example, each time the plant changes state, the display control unit 508 may display the display screen based on the default display settings corresponding to the changed state. In addition, each time the current user changes, the display control unit 508 may display the display screen based on the default display settings corresponding to the changed current user.

In addition, the display control unit 508 obtain various types of data to be displayed from the input unit 501 and the communication unit 502 and supply the data to the display unit 507. In addition, the display control unit 508 may supply the default display settings read from the storage unit 506 to the determining unit 510.

### [2-9. Detection unit 509]

The detection unit 509 detects a region seen by the user (also referred to as a visible region) within the display screen. For example, the detection unit 509 may detect a line of sight of the user. As an example in the present embodiment, the detection unit 509 may detect the line of sight by analyzing an image of eyeballs supplied from the image capturing unit 504. The detection unit 509 may detect a gaze position of both eyes from the image of the eyeballs, and detect a straight line connecting the midpoint of both eyes and the gaze position of the user as the line of sight of the user. Then, the detection unit 509 may detect the intersection of the line of sight of the user and the display screen as the position that the user is looking at within the display screen, and detect the region including this position as the visible region. The detection unit 509 may sequentially supply region data indicating the visible region to the determining unit 510.

Here, the visible region may be a region surrounded by a coordinate range within the display screen. In this case, the region data of the visible region may indicate the coordinate range within the display screen. In addition, when a plurality of windows are displayed within the display screen, the visible region may be any of the windows. In this case, the region data of the visible region may indicate the coordinate range within the display screen or indicate any window. As an example in the present embodiment, the visible region may be any of the display regions for each piece of data provided on the display screen.

### [2-10. Determining unit 510]

The determining unit 510 determines a degree of attention of each region within the display screen based on the detection result by the detection unit 509. The degree of attention may be an integrated time of time detected as the visible region, may be a ratio of the integrated time to a total display time of the display screen, and may be a number of times of continuous viewing for a reference time (as an example, 5 seconds) or more.

The determining unit 510 determines the degree of attention of each of the default display settings. For example, the determining unit 510 may determine the degree of attention of each region within the display screen of the default display settings corresponding to the state of the plant for each state. In addition, the determining unit 510 may determine the degree of attention of each region within the display screen of the default display settings corresponding to the user for each user. As an example in the present embodiment, the determining unit 510 may determine the degree of attention of each display region for each combination of the current user and the state of the plant. The determining unit 510 may determine the degree of attention based on the detection result by the detection unit 509 for an entire period in which the current display settings are applied.

The determining unit 510 may further determine a degree of relevance between the regions within the display screen based on the detection result by the detection unit 509. The determining unit 510 may determine the degree of relevance between the regions according to an order of viewing. For example, the determining unit 510 may determine a high degree of relevance between regions that are viewed continuously. As an example in the present embodiment, the determining unit 510 may determine the number of times that two regions are continuously viewed as the degree of relevance between said two regions. It is noted that two regions being viewed continuously may mean that after one region is viewed continuously for a reference time (as an example, 5 seconds) or more, the other region is viewed continuously for the reference time or more.

The determining unit 510 may supply the degree of attention of each region to the generating unit 511 together with the default display settings supplied from the display control unit 508 and the display settings being applied. In addition, the determining unit 510 may further supply the determined degree of relevance to the generating unit 511.

### [2-11. Generating unit 511]

The generating unit 511 generates update display settings that are different from the default display settings based on the determination result by the determining unit 510. The generating unit 511 may generate the update display settings with respect to the display settings being applied.

The generating unit 511 may generate the update display settings using the display settings being applied. For example, the generating unit 511 may generate the update display settings corresponding to the current state of the plant based on the degree of attention of each region within the display screen of the default display settings corresponding to said state. In addition, the generating unit 511 may generate the update display settings corresponding to the current user based on the degree of attention of each region within the display screen of the default display settings corresponding to said current user.

The generating unit 511 may generate the update display settings so that data displayed in a region having a high degree of attention has higher visibility by changing at least one display setting relating to said data (as an example in the present embodiment, display position, display color, brightness, or display size of the display region; or character modification, display color, or display size of text).

Higher visibility of data may mean higher visibility of the data compared to the current situation. Changing the position of the display region so as to increase visibility may mean moving the display position to the center side of the screen or in front of the user. Changing the display color of the display region and text so as to increase visibility may mean increasing difference in brightness between the background color and text color. Changing the brightness of the display region so as to increase visibility may mean increasing brightness. Changing the display size of the display region so as to increase visibility may mean making the display region larger. Changing the character modification of text so as to increase visibility may mean adding character modification (making it bold, as an example). Changing the display size of the text so as to increase visibility may mean making font size larger.

In addition, the generating unit 511 may generate the update display settings by associating regions having a high degree of relevance with each other. Associating the regions with each other may mean making the regions adjacent to each other, or making the regions or display color of text within the regions to be the same. The generating unit 511 may supply the generated update display settings to the updating unit 512.

### [2-12. Updating unit 512]

The updating unit 512 changes the default display settings in the storage unit 506 to the update display settings and causes the display control unit 508 to update the display screen, in response to an update instruction input from the user. Updating the display screen by the display control unit 508 may mean displaying a display screen according to the update display settings.

The updating unit 512 may change the update display settings to the default display settings being applied in response to the input of the update instruction. For example, the updating unit 512 may set the update display settings as the default display settings corresponding to the current state of the plant. In addition, the updating unit 512 may set the update display settings as the default display settings corresponding to the current user. As an example in the present embodiment, the updating unit 512 may set the update display settings as the default display settings corresponding to the combination of the current user and the state of the plant.

According to the abovementioned interface apparatus 5, the update display settings are generated based on the degree of attention of each region by the user within the display screen based on the default display settings, the default display settings are changed to the update display settings in response to the input of the update instruction, and the display screen is updated. Therefore, the display screen can be changed together with the default display settings according to the degree of attention of each region.

In addition, the default display settings are stored for each state of the plant. Each time the state of the plant changes, since the display screen is display based on the default display settings corresponding to the changed state, the display screen with the display settings corresponding to the state of the plant can be displayed.

In addition, the update display settings corresponding to the current state of the plant are generated based on the degree of attention of each region in the display screen of the default display settings corresponding to said state, and the update display settings becomes the default display settings of the said state. Due to this, it is possible to change the default display settings corresponding to the state of the plant according to the degree of attention of each region in the display screen of the default display settings of said state.

In addition, the plant is judged to be in the abnormal state when the alert signal is generated within the plant. Due to this, it is possible to accurately judge whether the plant is in the normal state or the abnormal state, and display the display screen with display settings according to the state of the plant.

In addition, the default display settings are stored for each user, and each time the current user is changed, the display screen is displayed based on the default display settings corresponding to the changed current user. Due to this, it is possible to display the display screen with display settings according to the user.

In addition, the update display settings corresponding to the current user are generated based on the degree of attention of each region within the display screen of the default display settings corresponding to the current user, and the update display settings become the default display settings of said current user. Due to this, it is possible to change the default display settings corresponding to the user according to the degree of attention of each region within the display screen of the default display settings of said current user.

In addition, the current user is identified by iris recognition of the eye image-captured by the image capturing unit 504. Due to this, it is possible to accurately identify the current user and display the display screen with the display settings corresponding to the current user.

In addition, the update display settings are generated so that data displayed in a region having a high degree of attention has higher visibility by changing at least one display setting relating to said data. Therefore, it is possible to generate a new display setting so as to increase the visibility of the region having a high degree of attention.

In addition, the degree of relevance between the regions within the display screen is further determined based on the detection result of the regions viewed by the user, and the update display settings are generated by associating the regions with high degree of relevance with each other. Therefore, it is possible to easily refer to data with a high degree of relevance to each other.

### [3. Data structure of storage unit 506]

FIG. 3 shows the data structure of the storage unit 506. The storage unit 506 may store the default display settings in association with the user ID, the state of the plant (as an example in the present embodiment, normal state or abnormal state).

### [4. Data structure of data stored by determining unit 510]

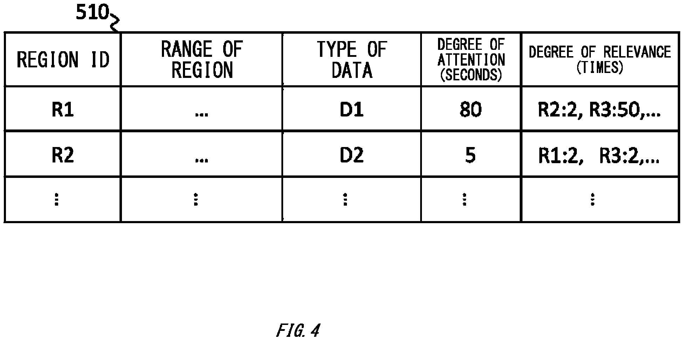

FIG. 4 shows the data structure of the data stored by the determining unit 510.

For each display region provided within the display screen, the determining unit 510 may store the identification information of said region (Also referred to as region ID. As an example, "R1", "R2", etc.), the coordinate range occupied by said region within the display screen (as an example, "D1", "D2", etc.), the degree of attention determined for said region, and the degree of relevance between other regions in association with each other. It is noted that the type of data may be a device ID of the device 2. In addition, in the present figure, the degree of attention is the integrated time (as an example, "80 seconds", etc.) of the time detected as the visible region by the detection unit 509. In addition, the degree of relevance is the number of times viewed in continuation with other regions, and as an example, the degree of relevance of the region "R1" is "2 times" between the region "R2" and "50 times" between the region "R3".

The determining unit 510 may store the data of the abovementioned data structure for each default display settings, that is, each combination of the user and the state of the plant. As an example in the present embodiment, the data of this data structure is stored within the determining unit 510, but it may be stored in the storage unit 506 or the like.

### [5. Operation of interface apparatus 5]

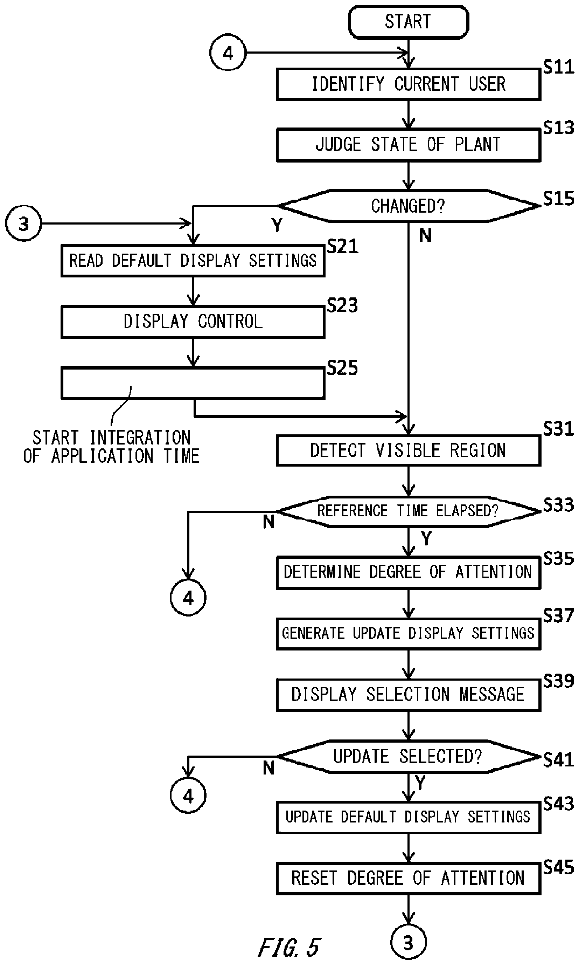

FIG. 5 shows the operation of the interface apparatus 5. The interface apparatus 5 changes the display settings by performing the processes of steps S11 to S45. It is noted that this operation may be started in response to activation of the interface apparatus 5, and may be started in response to the user logging in to the interface apparatus 5.

In step S11, the identifying unit 505 identifies the current user who is currently using the interface apparatus 5 among the plurality of users. The identifying unit 505 may identify the user facing the display screen as the current user by iris recognition of the eyes image-captured by the image capturing unit 504.

In step S13, the judging unit 503 judges the state of the plant. The judging unit 503 may judge the plant as being in the abnormal state in response to the generation of the alert signal within the plant, and judge the plant as being in the normal state in response to the alert signal not being sounded.

In step S15, the display control unit 508 judges whether at least the current user or the state of the plant has changed since the processing timing of the previous step S15. The display control unit 508 may judge whether the combination of the user ID supplied from the identifying unit 505 and the judging result of the state of the plant supplied from the judging unit 503 has changed. When the process of step S15 is performed first, the display control unit 508 may judge that at least one of the current user or the state of the plant has changed.

When it is judged that at least one of the current user or the state of the plant has changed (step S15; Y), the process may move to step S21. When it is judged that neither the current user nor the state of the plant has changed (step S15; N), the process may move to step S31.

In step S21, the display control unit 508 reads the default display settings corresponding to the combination of the current user and the state of the plant at the current time from the storage unit 506.

In step S23, the display control unit 508 displays the display screen based on the read default display settings. It is noted that the processes in steps S21 to S23 are performed each time at least one of the current user or the state of the plant changes. As a result, each time the state of the plant changes, the display screen is displayed based on the default display settings corresponding to the changed state. In addition, each time the current user changes, the display screen is displayed based on the default display settings corresponding to the changed current user.

In step S25, the display control unit 508 starts integrating application time for the default display settings read in step S21. In the case where the display control unit 508 has integrated the application time for other default display settings, the display control unit 508 may store the integrated time (also referred to as the total application time) in association with said display settings. In the case where the same display settings have been applied before, the display control unit 508 may restart the integration using the total application time stored in association with said display settings.

In step S31, the detection unit 509 detects the visible region of the user within the display screen. Based on the detection result, data of the degree of attention and the degree of relevance (see FIG. 4) stored by the determining unit 510 may be updated.

In step S33, the display control unit 508 determines whether a reference time has elapsed since the processing of step S25, that is, whether the total application time of the display settings has reached the reference time. The reference time may be any amount of time such as one hour, one day, or one week. In addition, the reference time may be difference for each default display settings, or in other words, for each combination of the current user and the state of the plant. As an example, the reference time corresponding to the normal state may be set longer or shorter than the reference time corresponding to the abnormal state. In addition, the reference time corresponding to a new user may be set longer or shorter than the reference time corresponding to a veteran user.

When it is judged that the reference time has not elapsed (step S33; N), the process may move to step S11 described above. When it is judged that the reference time has elapsed (step S33; Y), the process may move to step S35.

In step S35, the determining unit 510 determines the degree of attention of each region within the display screen based on the detection result by the detection unit 509. The determining unit 510 may further determine the degree of relevance between regions within the display screen. The determining unit 510 may read the degree of attention and the degree of relevance of each region stored at the current time in correspondence with the default display settings being applied, and set the degree of attention and the degree of relevance as the target of determination.

In step S37, the generating unit 511 generates the update display settings different from the default display settings based on the determination result by the determining unit 510. The generating unit 511 may generate the update display settings by further using the degree of attention of each region corresponding to the display settings different from the default display settings being applied.

For example, when the current state of the plant is in the normal state, the generating unit 511 may generate the update display settings corresponding to the normal state based on the degree of attention of each region within the display screen of the default display settings corresponding to the normal state and the degree of attention of each region within the display screen of the default display settings corresponding to the abnormal state. In this case, in step S35, the determining unit 510 may further read the degree of attention of each region currently stored in correspondence with the default display settings corresponding to the combination of the current user and the abnormal state. Then, the generating unit 511 may generate the update display settings corresponding to the normal state by changing at least one of the display settings (as an example in the present embodiment, display position, display color, brightness or display size of the display region; or character modification, display color, or display size of text) of data displayed in a region with a higher degree of attention than a reference within the display screen of the default display settings corresponding to the abnormal state so that the visibility of said data does not decrease.

In addition, when the current user is a first user, the generating unit 511 may generate the update display settings corresponding to said first user based on the degree of attention of each region within the display screen of the default display settings corresponding to said first user and the degree of attention of each region within the display screen of the default display settings corresponding to a second user. In this case, in step S35, the determining unit 510 may further read the degree of attention of each region currently stored in correspondence with the default display settings corresponding to the combination of the current state of the plant and the second user. Then, when the current user is a first user, the generating unit 511 may generate the update display settings corresponding to the first user by changing at least one of the display settings relating to data displayed in a region having a higher degree of attention than a reference within the display screen of the default display settings corresponding to the second user so that the visibility of said data does not decrease. It is noted that the first user may be a new user and the second user may be a veteran user, but the first user may also be a veteran user and the second user may also be a new user. The first user and the second user may be set arbitrarily.

In addition, when the current state of the plant is in the normal state and the current user is the first user, the generating unit 511 may generate the update display settings corresponding to the combination of the normal state and the first user based on the degree of attention of each region within the display screen of the default display settings corresponding to the combination of the normal state and the first user and the degree of attention of each region within the display screen of the default display settings corresponding to the combination of the abnormal state and the second user. In this case, in step S35, the determining unit 510 may further read the degree of attention of each region currently stored in correspondence to the default display settings corresponding to the combination of the second user and the abnormal state. Then, the generating unit 511 may generate the update display settings corresponding to the normal state by changing at least one display setting relating to data displayed within a region with a higher degree of attention than a reference within the display screen of the default display settings corresponding to the combination of the abnormal state and the second user so that the visibility of said data does not decrease.

Here, the region having a high degree of attention than a reference may be a region having a higher degree of attention than an average or a region having the highest degree of attention. The fact that the visibility of the data does not decrease may mean that the visibility of said data does not decrease in comparison to the current situation. Changing the display position so that the visibility does not decrease may mean changing the display position so that the distance between the display position and the center of the screen does not become larger. Changing the display color so that the visibility does not decrease may mean changing the display color so that the difference in brightness between the background color and the color of text does not become smaller. Changing the brightness so that the visibility does not decrease may mean changing the brightness so that the brightness does not decrease. Changing the display size of the display region so that visibility does not decrease may mean changing the display size of the display region so that the display region does not become smaller. Changing the display size of text so that the visibility does not decrease may mean changing the display size of text so that the font size does not become smaller. Changing the text modification so that the visibility does not decrease may mean maintaining the character modification or adding character modification (making it bold, as an example).

In step S39, the updating unit 512, via the display control unit 508, causes the display unit 507 to display the display screen based on the update display settings and a message for selecting whether to update the display screen.

In step S41, the updating unit 512 judges whether it has been selected to perform the update. The updating unit 512 may make the judgement based on an input signal from the input unit 501. When it is judged that it has not been selected to perform the update (step S41, N), the process may move to step 511. In this case, the display screen of the default display settings is maintained. When it is judged that is has been selected to perform the update (step S41; Y), the process may move to step S43.

In step S43, the updating unit 512 changes the default display settings in the storage unit 506 to the update display settings and cause the display control unit 508 to update the display screen.

In step S45, the determining unit 510 resets the degree of attention stored in correspondence to the default display settings before the update. The determining unit 510 may further reset the degree of relevance stored in correspondence with the default display settings before the update. When the processing in step S45 ends, the process may move to the abovementioned step S21.

According to the abovementioned operations, the display screen based on the update display settings and the message for selecting whether to update the display screen are displayed, the default display settings are changed to the update display settings in response to it being selected to perform the update, and the display screen is updated. Therefore, it is possible to prevent the display settings from being changed without permission.

In addition, when the current state of the plant is normal, the update display settings corresponding to the normal state are generated based on the degree of attention of each region within the display screen of the default display settings corresponding to the normal state and the degree of attention of each region within the display screen of the default display settings corresponding to the abnormal state. Therefore, it is possible to change the display settings for the normal state in consideration of the degree of attention within the display screen in the abnormal state. For example, it is possible to change the display settings so that the regions to be paid attention to in the abnormal state are also easily paid attention to in the normal state. In addition, it is possible to change the display settings so that a region different from the regions to be paid attention to in the abnormal state can be easily paid attention to in the normal state.

In addition, the update display settings are generated by changing at least one of the display settings relating to the data displayed within a region with a higher degree of attention than a reference within the display screen of the default display settings corresponding to the abnormal state so that the visibility of said data does not decrease. Therefore, it is possible to generate new display settings corresponding to the normal state without decreasing the visibility of the region with a higher degree of attention than a reference in the abnormal state.

In addition, when the current user is the first user, the update display settings corresponding to said first user are generated based on the degree of attention of each region within the display screen of the default display settings corresponding to said first user and the degree of attention of each region within the display screen of the default display settings corresponding to the second user. Therefore, it is possible to change the display settings of the first user can be changed in consideration of the degree of attention within the display screen of the default display settings of the second user. For example, it is possible to change the display settings so that the region paid more attention to by the second user is also easily paid attention to by the first user. In addition, it is possible to change the display settings so that a region different from the region paid attention to by the second user is easily paid attention to by the first user.

In addition, the update display settings corresponding to the first user are generated by changing at least one of the display settings relating to the data displayed in a region with a higher degree of attention than a reference within the display screen of the default display settings corresponding to the second user so that the visibility of said data does not decrease. Therefore, it is possible to generate new display settings corresponding to the first user without decreasing the visibility of the region with a higher degree of attention than a reference of the second user.

### [6. Modified example]

In the abovementioned embodiment, the interface apparatus 5 has been described to include the input unit 501, the communication unit 502, the judging unit 503, the image capturing unit 504, the identifying unit 505, the storage unit 506 and the display unit 507, but it may not include any one of these. For example, when the interface apparatus 5 does not include the communication unit 502 and the input unit 501, the display unit 507 may display contents stored in the storage unit 506. In addition, when the interface apparatus 5 does not include the judging unit 503 and the identifying unit 505 in a modified example not falling under the scope of the claimed invention, the degree of attention of each region within the display screen may be determined regardless of the state of the plant and the current user to generate the update display settings.

In addition, although the identifying unit 505 has been described to identify the current user by using the iris pattern of the eye that has been image-captured by the image capturing unit 504, the current user may be identified by another method. For example, the identifying unit 505 may identify the current user based on authentication information input from the user via the input unit 501. In this case, the storage unit 506 may store authentication information including a user ID and a password as identification data for each user. In addition, the identifying unit 505 may identify the current user by face authentication of the user image-captured by the image capturing unit 504. In this case, the storage unit 506 may store characteristic data indicating facial characteristics (relative positions and sizes of eyes, nose, and mouth, as an example) as identification data for each user.

In addition, although the apparatus according to the present embodiment has been described as the interface apparatus 5, it may be the resource management apparatus 6 or the terminal device for maintenance 3. In addition, the apparatus may be any other apparatus as long as it displays to a user, and as an example, may be a head-mounted display.

In addition, various embodiments of the present invention may be described with reference to flowcharts and block diagrams, wherein the block may serve as (1) a stage in a process in which an operation is performed, or (2) a section of an apparatus having a role of performing an operation. Specific stages and sections may be implemented by dedicated circuits, programmable circuits supplied with computer-readable instructions stored on a computer-readable medium, and/or processors supplied with computer-readable instructions stored on a computer-readable medium. Dedicated circuits may include digital and/or analog hardware circuits, and may include integrated circuits (ICs) and/or discrete circuits. Programmable circuits may include reconfigurable hardware circuits including memory elements such as logical AND, logical OR, logical XOR, logical NAND, logical NOR, and other logical operations, flip-flops, registers, field programmable gate arrays (FPGA), programmable logic arrays (PLA), etc.

The computer readable medium may include any tangible device capable of storing instructions executed by the appropriate device, so that the computer readable medium having the instructions stored therein will be equipped with a product that contains instructions that can be executed to create means for performing operations specified in a flowchart or block diagram. Examples of computer-readable media may include electronic storage media, magnetic storage media, optical storage media, electromagnetic storage media, and semiconductor storage media. More specific examples of computer-readable media may include floppy disks (registered trademark), diskettes, hard disks, random access memory (RAM), read-only memory (ROM), erasable programmable read-only memory (EPROM or flash memory), electrically erasable programmable read-only memory (EEPROM), static random access memory (SRAM), compact disc read-only memory (CD-ROM), digital versatile discs (DVD), Blu-ray (registered trademark) discs, memory sticks, and integrated circuit cards.

Computer-readable instructions may include source code or object code written in any combination of one or more programming languages including assembler instructions, instruction set architecture (ISA) instructions, machine instructions, machine-dependent instructions, microcode, firmware instructions, state setting data, or Smalltalk (registered trademark), JAVA (registered trademark), object-oriented programming languages such as C++, and traditional procedural programming languages such as the "C" programming language or similar programming languages.

Computer-readable instructions may be provided locally or via a local area network (LAN) or a wide area network (WAN) such as the Internet to a processor or programmable circuit of a general purpose computer, special purpose computer, and executed to create a means for performing operations specified in a flowchart or block diagram. Examples of processors include computer processors, processing units, microprocessors, digital signal processors, controllers, and microcontrollers.

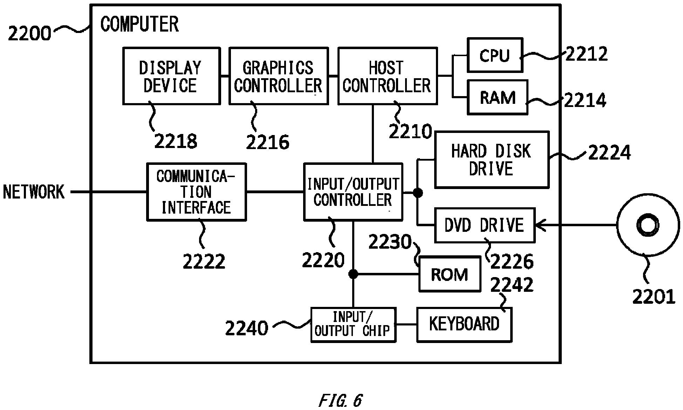

FIG. 6 shows an example of a computer 2200 in which a plurality of aspects of the present invention may be embodied in whole or in part. A program installed on the computer 2200 may cause the computer 2200 to function as operations associated with the apparatus according to the embodiment of the present invention or as one or more sections of said apparatus or to execute said operations or said one or more sections, and/or to cause the computer 2200 to execute processes according to the embodiment of the present invention or steps of said process. Such a program may be run by a CPU 2212 to cause the computer 2200 to execute certain operations associated with some or all of the blocks in the flowcharts and block diagrams described herein.

The computer 2200 according to the present embodiment includes the CPU 2212, a RAM 2214, a graphics controller 2216, and a display device 2218, which are connected to each other by a host controller 2210. In addition, the computer 2200 includes a communication interface 2222, a hard disk drive 2224, a DVD-ROM drive 2226, and an input/output unit such as an IC card drive, which are connected to the host controller 2210 via an input/output controller 2220. In addition, the computer includes legacy input/output units such as a ROM 2230 and a keyboard 2242, which are connected to the input/output controller 2220 via an input/output chip 2240.

The CPU 2212 operates according to the program stored in the ROM 2230 and the RAM 2214, thereby controlling each unit. The graphics controller 2216 obtains image data generated by the CPU 2212 in a frame buffer or the like provided within the RAM 2214 or itself so that the image data is displayed on the display device 2218.

The communication interface 2222 communicates with other electronic devices via a network. The hard disk drive 2224 stores programs and data used by the CPU 2212 within the computer 2200. The DVD-ROM drive 2226 reads the programs or data from a DVD-ROM 2201 and provides the programs or data to the hard disk drive 2224 via the RAM 2214. The IC card drive reads programs and data from an IC card and/or writes programs and data to the IC card.

The ROM 2230 stores a boot program or the like executed by the computer 2200 at the time of activation and/or a program depending on hardware of the computer 2200. The input/output chip 2240 may also connect various input/output units to the input/output controller 2220 via a parallel port, serial port, keyboard port, or mouse port.

The program is provided by a computer-readable medium such as the DVD-ROM 2201 or the IC card. The program is read from the computer-readable medium, installed on the hard disk drive 2224, RAM 2214, or the ROM 2230, which are also examples of the computer-readable medium, and executed by the CPU 2212. The information processing described in these programs is read by the computer 2200 and provides a link between the program and the various types of hardware resources described above. The apparatus or methods may be configured by implementing operation or processing of information in accordance with the use of the computer 2200.

For example, when communication is executed between the computer 2200 and an external device, the CPU 2212 may execute a communication program loaded in the RAM 2214, and command for communication processing to the communication interface 2222 based on the processing described in the communication program. Under the control of the CPU 2212, the communication interface 2222 reads transmission data stored in a transmission buffer processing region provided within a recording medium such as the RAM 2214, hard disk drive 2224, DVD-ROM 2201, or the IC card and transmits the read transmission data to a network, or writes received data received from the network to a reception buffer processing area or the like provided on the recording medium.

In addition, the CPU 2212 may cause the RAM 2214 to read all or necessary parts of a file or database stored in an external recording medium such as the hard disk drive 2224, DVD-ROM drive 2226 (DVD-ROM 2201), or the IC card, and perform various types of processing on the data on the RAM 2214. The CPU 2212 then writes back the processed data to the external recording medium.

Various types of information such as various types of programs, data, tables, and databases may be stored in the recording medium and processed. The CPU 2212 may execute various types of operations, information processing, conditional judgment, conditional branching, unconditional branching, and information retrieval/replacement described in various parts of the present disclosure and specified by command sequences of a program with respect to the data read from the RAM 2214, and the results are written back to RAM 2214. In addition, the CPU 2212 may search for information in a file or a database within the recording medium. For example, when a plurality of entries each having an attribute value of a first attribute associated with the attribute value of a second attribute are stored in the recording medium, the CPU 2212 may search for an entry specified by the attribute value of the first attribute that satisfies a condition among said plurality of entries, read the attribute value of the second attribute stored in said entries, and thus obtain the attribute value for the second attribute associated with the first attribute satisfying a predetermined condition.

The program or software module described above may be stored on the computer 2200 or on a computer-readable medium near the computer 2200. In addition, a recording medium such as a hard disk or RAM provided in a dedicated communication network or a server system connected to the Internet can be used as the computer readable medium, thereby providing the program to the computer 2200 over the network.

While the embodiments of the present invention have been described, the technical scope of the invention is not limited to the above described embodiments. It is apparent to persons skilled in the art that various alterations and improvements can be added to the above-described embodiments provided that they fall within the scope of the appended claims.

The operations, procedures, steps, and stages of each process performed by an apparatus, system, program, and method shown in the claims, embodiments, or diagrams can be performed in any order as long as the order is not indicated by "prior to," "before," or the like and as long as the output from a previous process is not used in a later process. Even if the process flow is described using phrases such as "first" or "next" in the claims, embodiments, or diagrams, it does not necessarily mean that the process must be performed in this order.

### EXPLANATION OF REFERENCES

1 maintenance management system
2 devices
3 terminal device for maintenance
4 operation control apparatus
5 interface apparatus
6 resource management apparatus
100 control network
501 input unit
502 communication unit
503 judging unit
504 image capturing unit
505 identifying unit
506 storage unit
507 display unit
508 display control unit
509 detection unit
510 determining unit
511 generating unit
512 updating unit
2200 computer
2201 DVD-ROM
2210 host controller
2212 CPU
2214 RAM
2216 graphics controller
2218 display device
2220 input/output controller
2222 communication interface
2224 hard disk drive
2226 DVD-ROM drive
2230 ROM
2240 input/output chip
2242 keyboard

## Claims

1. An apparatus, comprising:
a display control unit (508) configured to display a display screen for displaying data within a plant, based on default display settings;
a detection unit (509) configured to detect a region viewed by a user within the display screen;
a determining unit (510) configured to determine a degree of attention of each region within the display screen based on a detection result by the detection unit (509);
a generating unit (511) configured to generate update display settings different from the default display settings based on a determination result by the determining unit (510); and
an updating unit (512) configured to change the default display settings to the update display settings and cause the display control unit (508) to update the display screen in response to input of an update command by the user, wherein the apparatus further comprises:
a judging unit (503) configured to judge a state of the plant, and
a storage unit (506) configured to store the default display settings for each state of the plant, wherein
each time the state of the plant changes, the display control unit (508) is configured to display the display screen based on the default display settings corresponding to the state after changing,
wherein the plant is any of an industrial plant, a plant that manages and controls wells and their surroundings, a plant that manages and controls power generation, a plant that manages and controls environmental power generation, or a plant that manages and controls water supply, sewerage, or dams.

2. The apparatus according to claim 1, wherein
the determining unit (510) is configured to determine, for each state of the plant, the degree of attention of each region within the display screen of the default display settings corresponding to said state,
the generating unit (511) is configured to generate the update display settings corresponding to a current state of the plant based on the degree of attention of each region within the display screen of the default display settings corresponding to said state, and
the updating unit (512) is configured to set the update display settings as the default display settings corresponding to the current state of the plant in response to the input of the update command.

3. The apparatus according to claim 2, wherein
the judging unit (503) is configured to judge whether the plant is in a normal state or an abnormal state, and
when the current state of the plant is in the normal state, the generating unit (511) is configured to generate the update display settings corresponding to the normal state based on the degree of attention of each region within the display screen of the default display settings corresponding to the normal state and the degree of attention of each region within the display screen of the default display settings corresponding to the abnormal state.

4. The apparatus according to claim 3, wherein
the generating unit (511) is configured to generate the update display settings corresponding to the normal state, so that visibility of data displayed in a region with a higher degree of attention than a reference within the display screen of the default display settings corresponding to the abnormal state does not decrease, by changing at least one of a display position, display color, brightness, or display size of a display region of said data; or character modification, display color, or display size of text of said data.

5. The apparatus according to claims 3 or 4, wherein
the judging unit (503) is configured to judge that the plant is in the abnormal state in response to generation of an alert signal within the plant.

6. The apparatus according to any one of claims 1 to 5, further comprising:
an identifying unit (505) configured to identify, among a plurality of users, a current user who is currently using said apparatus, wherein
the storage unit (506) is configured to store the default display settings for each of the users, wherein
each time the current user is changed, the display control unit (508) is configured to display the display screen based on the default display settings corresponding to the current user after changing.

7. The apparatus according to claim 6, wherein
the determining unit (510) is configured to determine, for each user, the degree of attention of each region within the display screen of the default display settings corresponding to said user,
the generating unit (511) is configured to generate the update display settings corresponding to the current user based on the degree of attention of each region within the display screen of the default display settings corresponding to said current user, and
the updating unit (512) is configured to set the update display settings as the default display settings corresponding to the current user in response to the input of the update command.

8. The apparatus according to claim 7, wherein
when the current user is a first user, the generating unit (511) is configured to generate the update display settings corresponding to said first user based on the degree of attention of each region within the display screen of the default display settings corresponding to said first user and the degree of attention of each region within the display screen of the default display settings corresponding to a second user.

9. The apparatus according to claim 8, wherein
when the current user is the first user, the generating unit (511) is configured to generate the update display settings corresponding to the first user, so that visibility of data displayed in a region with a higher degree of attention than a reference within the display screen of the default display settings corresponding to the second user does not decrease, by changing at least one of a display position, display color, brightness, or display size of a display region of said data; or character modification, display color, or display size of text of said data.

10. The apparatus according to any one of claims 6 to 9, further comprising
an image capturing unit (504) configured to image-capture an eye of the user, wherein
the identifying unit (505) is configured to identify the current user by iris recognition of the eye that has been image-captured by the image capturing unit (504).

11. The apparatus according to any one of claims 6 to 9, further comprising
an input unit (501) configured to receive input of authentication information from a user, wherein
the identifying unit (505) is configured to identify the current user based on the authentication information.

12. The apparatus according to any one of claims 1 to 11, wherein
the generating unit (511) is configured to generate the update display settings, so that visibility of data displayed in a region with a high degree of attention increases, by changing at least one of a display position, display color, brightness, or display size of a display region of said data; or character modification, display color, or display size of text of said data.

13. The apparatus according to any one of claims 1 to 12, wherein
the determining unit (510) further determines a degree of relevance between regions within the display screen based on the detection result by the detection unit (509), and
the generating unit (511) is configured to generate the update display settings by associating regions with a high degree of relevance with each other.

14. The apparatus according to any one of claims 1 to 13, wherein
the updating unit (512) is configured to
display the display screen based on the update display settings and a message for selecting whether to perform an update of the display screen, and
in response to selection to perform the update, change the default display settings to the update display settings and cause the display control unit (508) to update the display screen.

15. A method, comprising:
a display controlling step of displaying a display screen for displaying data within a plant, based on default display settings;
a detection step of detecting a region viewed by a user within the display screen;
a determining step of determining a degree of attention of each region within the display screen based on a detection result by the detection step;
a generating step of generating update display settings different from the default display settings based on a determination result by the determining step; and
an updating step of changing the default display settings to the update display settings and causing the display controlling step to update the display screen in response to input of an update command by a user, wherein the method further comprises:
a judging step of judging a state of the plant, and
a storage step of storing the default display settings for each state of the plant, wherein
the display controlling step includes, each time the state of the plant changes, displaying the display screen based on the default display settings corresponding to the state after changing,
wherein the plant is any of an industrial plant, a plant that manages and controls wells and their surroundings, a plant that manages and controls power generation, a plant that manages and controls environmental power generation, or a plant that manages and controls water supply, sewerage, or dams.

16. A program comprising instructions which, when the program is executed by a computer, cause the computer to function as:
a display control unit (508) configured to display a display screen for displaying data within a plant, based on default display settings;
a detection unit (509) configured to detect a region viewed by a user within the display screen;
a determining unit (510) configured to determine a degree of attention of each region within the display screen based on a detection result by the detection unit (509);
a generating unit (511) configured to generate update display settings different from the default display settings based on a determination result by the determining unit (510); and
an updating unit (512) configured to change the default display settings to the update display settings and cause the display control unit (508) to update the display screen in response to input of an update command by the user, wherein the program is configured to further cause the computer to function as:
a judging unit (503) configured to judge a state of the plant, and
a storage unit (506) configured to store the default display settings for each state of the plant, wherein
each time the state of the plant changes, the display control unit (508) is configured to display the display screen based on the default display settings corresponding to the state after changing,
wherein the plant is any of an industrial plant, a plant that manages and controls wells and their surroundings, a plant that manages and controls power generation, a plant that manages and controls environmental power generation, or a plant that manages and controls water supply, sewerage, or dams.

17. A computer readable recording medium storing the program according to claim 16.

## Patentansprüche

1. Vorrichtung, umfassend:
eine Anzeigesteuereinheit (508), die dazu eingerichtet ist, einen Anzeigebildschirm zum Anzeigen von Daten innerhalb einer Anlage auf der Grundlage von Standardanzeigeeinstellungen anzuzeigen;
eine Erfassungseinheit (509), die dazu eingerichtet ist, einen von einem Benutzer betrachteten Bereich innerhalb des Anzeigebildschirms zu erfassen;
eine Bestimmungseinheit (510), die dazu eingerichtet ist, auf der Grundlage eines Erfassungsergebnisses durch die Erfassungseinheit (509) einen Aufmerksamkeitsgrad für jeden Bereich innerhalb des Anzeigebildschirms zu bestimmen;
eine Erzeugungseinheit (511), die dazu eingerichtet ist, Aktualisierungsanzeigeeinstellungen, die sich von den Standardanzeigeeinstellungen unterscheiden, auf der Grundlage eines Bestimmungsergebnisses durch die Bestimmungseinheit (510) zu erzeugen; und
eine Aktualisierungseinheit (512), die dazu eingerichtet ist, die StandardAnzeigeeinstellungen in die Aktualisierungs-Anzeigeeinstellungen zu ändern und die Anzeigesteuereinheit (508) zu veranlassen, den Anzeigebildschirm als Reaktion auf die Eingabe eines Aktualisierungsbefehls durch den Benutzer zu aktualisieren, wobei die Vorrichtung weiterhin umfasst:
eine Beurteilungseinheit (503), die dazu eingerichtet ist, einen Zustand der Anlage zu beurteilen, und
eine Speichereinheit (506), die dazu eingerichtet ist, die Standardanzeigeeinstellungen für jeden Zustand der Anlage zu speichern, wobei
jedes Mal, wenn sich der Zustand der Anlage ändert, die Anzeigesteuereinheit (508) dazu eingerichtet ist, den Anzeigebildschirm auf der Grundlage der Standardanzeigeeinstellungen anzuzeigen, die dem Zustand nach der Änderung entsprechen,
wobei es sich bei der Anlage um eine Industrieanlage, eine Anlage zur Verwaltung und Steuerung von Brunnen und deren Umgebung, eine Anlage zur Verwaltung und Steuerung der Energieerzeugung, eine Anlage zur Verwaltung und Steuerung der Umweltenergieerzeugung oder eine Anlage zur Verwaltung und Steuerung der Wasserversorgung, der Kanalisation oder von Dämmen handelt.

2. Vorrichtung nach Anspruch 1, bei der
die Bestimmungseinheit (510) dazu eingerichtet ist, für jeden Zustand der Anlage den Grad der Aufmerksamkeit jedes Bereichs innerhalb des Anzeigebildschirms der diesem Zustand entsprechenden Standardanzeigeeinstellungen zu bestimmen,
die Erzeugungseinheit (511) dazu eingerichtet ist, die Aktualisierungsanzeigeeinstellungen, die einem aktuellen Zustand der Anlage entsprechen, auf der Grundlage des Grads der Aufmerksamkeit jedes Bereichs innerhalb des Anzeigebildschirms der Standardanzeigeeinstellungen, die dem Zustand entsprechen, zu erzeugen, und
die Aktualisierungseinheit (512) dazu eingerichtet ist, als Reaktion auf die Eingabe des Aktualisierungsbefehls die Aktualisierungsanzeigeeinstellungen als die dem aktuellen Zustand der Anlage entsprechenden Standardanzeigeeinstellungen festzulegen.

3. Vorrichtung nach Anspruch 2, bei der
die Beurteilungseinheit (503) dazu eingerichtet ist zu beurteilen, ob sich die Anlage in einem normalen Zustand oder einem anormalen Zustand befindet, und
wenn sich der aktuelle Zustand der Anlage im Normalzustand befindet, die Erzeugungseinheit (511) dazu eingerichtet ist, die Aktualisierungsanzeigeeinstellungen, die dem Normalzustand entsprechen, auf der Grundlage des Grads der Aufmerksamkeit jedes Bereichs innerhalb des Anzeigebildschirms der Standardanzeigeeinstellungen, die dem Normalzustand entsprechen, und des Grads der Aufmerksamkeit jedes Bereichs innerhalb des Anzeigebildschirms der Standardanzeigeeinstellungen, die dem anormalen Zustand entsprechen, zu erzeugen.

4. Vorrichtung nach Anspruch 3, bei der
die Erzeugungseinheit (511) dazu eingerichtet ist, die dem Normalzustand entsprechenden Aktualisierungsanzeigeeinstellungen zu erzeugen, so dass die Sichtbarkeit von Daten, die in einem Bereich mit einem höheren Aufmerksamkeitsgrad als einer Referenz innerhalb des Anzeigebildschirms der dem anormalen Zustand entsprechenden Standardanzeigeeinstellungen angezeigt werden, nicht abnimmt, indem sie eine Anzeigeposition und/oder eine Anzeigefarbe und/oder eine Helligkeit und/oder eine Anzeigegröße eines Anzeigebereichs der Daten und/oder eine Zeichenmodifikation und/oder eine Anzeigefarbe und/oder eine Anzeigegröße von Text der Daten ändert.

5. Vorrichtung nach Anspruch 3 oder 4, bei der
die Beurteilungseinheit (503) dazu eingerichtet ist, als Reaktion auf die Erzeugung eines Alarmsignals innerhalb der Anlage zu beurteilen, dass sich die Anlage in dem anormalen Zustand befindet.

6. Vorrichtung nach einem der Ansprüche 1 bis 5, weiterhin umfassend:
eine Identifizierungseinheit (505), die dazu eingerichtet ist, unter einer Vielzahl von Benutzern einen aktuellen Benutzer zu identifizieren, der die Vorrichtung gerade benutzt, wobei
die Speichereinheit (506) dazu eingerichtet ist, die Standardanzeigeeinstellungen für jeden der Benutzer zu speichern, wobei
jedes Mal, wenn der aktuelle Benutzer gewechselt wird, die Anzeigesteuereinheit (508) dazu eingerichtet ist, den Anzeigebildschirm auf der Grundlage der Standardanzeigeeinstellungen anzuzeigen, die dem aktuellen Benutzer nach dem Wechsel entsprechen.

7. Vorrichtung nach Anspruch 6, bei der
die Bestimmungseinheit (510) dazu eingerichtet ist, für jeden Benutzer den Grad der Aufmerksamkeit für jeden Bereich innerhalb des Anzeigebildschirms der Standardanzeigeeinstellungen entsprechend dem Benutzer zu bestimmen,
die Erzeugungseinheit (511) dazu eingerichtet ist, die Aktualisierungsanzeigeeinstellungen, die dem aktuellen Benutzer entsprechen, auf der Grundlage des Grads der Aufmerksamkeit jedes Bereichs innerhalb des Anzeigebildschirms der Standardanzeigeeinstellungen, die dem aktuellen Benutzer entsprechen, zu erzeugen, und
die Aktualisierungseinheit (512) dazu eingerichtet ist, als Reaktion auf die Eingabe des Aktualisierungsbefehls die Aktualisierungsanzeigeeinstellungen als die dem aktuellen Benutzer entsprechenden Standardanzeigeeinstellungen festzulegen.

8. Vorrichtung nach Anspruch 7, bei der,
wenn der aktuelle Benutzer ein erster Benutzer ist, die Erzeugungseinheit (511) dazu eingerichtet ist, die Aktualisierungsanzeigeeinstellungen, die dem ersten Benutzer entsprechen, auf der Grundlage des Grads der Aufmerksamkeit jedes Bereichs innerhalb des Anzeigebildschirms der Standardanzeigeeinstellungen, die dem ersten Benutzer entsprechen, und des Grads der Aufmerksamkeit jedes Bereichs innerhalb des Anzeigebildschirms der Standardanzeigeeinstellungen, die einem zweiten Benutzer entsprechen, zu erzeugen.

9. Vorrichtung nach Anspruch 8, bei der
wenn der aktuelle Benutzer der erste Benutzer ist, die Erzeugungseinheit (511) dazu eingerichtet ist, die Aktualisierungsanzeigeeinstellungen entsprechend dem ersten Benutzer zu erzeugen, so dass die Sichtbarkeit von Daten, die in einem Bereich mit einem höheren Aufmerksamkeitsgrad als einer Referenz innerhalb des Anzeigebildschirms der Standardanzeigeeinstellungen entsprechend dem zweiten Benutzer angezeigt werden, nicht abnimmt, indem eine Anzeigeposition und/oder eine Anzeigefarbe und/oder eine Helligkeit und/oder eine Anzeigegröße eines Anzeigebereichs der Daten und/oder eine Zeichenmodifikation und/oder eine Anzeigefarbe und/oder eine Anzeigegröße von Text der Daten geändert wird.

10. Vorrichtung nach einem der Ansprüche 6 bis 9, weiterhin umfassend:
eine Bilderfassungseinheit (504), die dazu eingerichtet ist, ein Auge des Benutzers bildlich zu erfassen, wobei die Identifizierungseinheit (505) dazu eingerichtet ist, den aktuellen Benutzer durch Iriserkennung des Auges, das von der Bilderfassungseinheit (504) bildlich erfasst wurde, zu identifizieren.

11. Vorrichtung nach einem der Ansprüche 6 bis 9, weiterhin umfassend:
eine Eingabeeinheit (501), die dazu eingerichtet ist, die Eingabe von Authentifizierungsinformationen von einem Benutzer zu empfangen, wobei
die Identifizierungseinheit (505) dazu eingerichtet ist, den aktuellen Benutzer auf der Grundlage der Authentifizierungsinformationen zu identifizieren.

12. Vorrichtung nach einem der Ansprüche 1 bis 11, bei der
die Erzeugungseinheit (511) dazu eingerichtet ist, die Aktualisierungsanzeigeeinstellungen zu erzeugen, so dass die Sichtbarkeit von Daten, die in einem Bereich mit einem hohen Grad an Aufmerksamkeit angezeigt werden, zunimmt, indem eine Anzeigeposition und/oder eine Anzeigefarbe und/oder eine Helligkeit und/oder eine Anzeigegröße eines Anzeigebereichs der Daten und/oder eine Zeichenmodifikation und/oder eine Anzeigefarbe und/oder eine Anzeigegröße von Text der Daten geändert wird.

13. Vorrichtung nach einem der Ansprüche 1 bis 12, bei der
die Bestimmungseinheit (510) weiterhin einen Grad der Relevanz zwischen Bereichen innerhalb des Anzeigebildschirms auf der Grundlage des Erfassungsergebnisses durch die Erfassungseinheit (509) bestimmt, und
die Erzeugungseinheit (511) dazu eingerichtet ist, die aktualisierten Anzeigeeinstellungen zu erzeugen, indem sie Bereiche mit einem hohen Grad an Relevanz einander zuordnet.

14. Vorrichtung nach einem der Ansprüche 1 bis 13, bei der
die Aktualisierungseinheit (512) dazu eingerichtet ist,
den Anzeigebildschirm auf der Grundlage der Aktualisierungsanzeigeeinstellungen und einer Nachricht zur Auswahl anzuzeigen, ob eine Aktualisierung des Anzeigebildschirms ausgeführt werden soll, und
als Reaktion auf die Auswahl zum Ausführen der Aktualisierung die Standardanzeigeeinstellungen in die Aktualisierungsanzeigeeinstellungen zu ändern und die Anzeigesteuereinheit (508) zu veranlassen, den Anzeigebildschirm zu aktualisieren.

15. Verfahren, umfassend:
einen Anzeigesteuerschritt des Anzeigens eines Anzeigebildschirms für das Anzeigen von Daten innerhalb einer Anlage auf der Grundlage von Standardanzeigeeinstellungen;
einen Erfassungsschritt des Erfassens eines von einem Benutzer betrachteten Bereichs innerhalb des Anzeigebildschirms;
einen Bestimmungsschritt des Bestimmens eines Aufmerksamkeitsgrads jedes Bereichs innerhalb des Anzeigebildschirms auf der Grundlage eines Erfassungsergebnisses durch den Erfassungsschritt;
einen Erzeugungsschritt des Erzeugens von Aktualisierungsanzeigeeinstellungen, die sich von den Standardanzeigeeinstellungen unterscheiden, auf der Grundlage eines Bestimmungsergebnisses durch den Bestimmungsschritt; und
einen Aktualisierungsschritt des Änderns der Standardanzeigeeinstellungen in die Aktualisierungsanzeigeeinstellungen und des Veranlassens des Anzeigesteuerschritts, den Anzeigebildschirm als Reaktion auf die Eingabe eines Aktualisierungsbefehls durch einen Benutzer zu aktualisieren, wobei das Verfahren weiterhin umfasst:
einen Beurteilungsschritt des Beurteilens eines Zustands der Anlage und
einen Speicherschritt des Speicherns der Standardanzeigeeinstellungen für jeden Zustand der Anlage, wobei
der Anzeigesteuerschritt jedes Mal, wenn sich der Zustand der Anlage ändert, das Anzeigen des Anzeigebildschirms auf der Grundlage der Standardanzeigeeinstellungen, die dem Zustand nach der Änderung entsprechen, umfasst,
wobei es sich bei der Anlage um eine Industrieanlage, eine Anlage zur Verwaltung und Steuerung von Brunnen und deren Umgebung, eine Anlage zur Verwaltung und Steuerung der Energieerzeugung, eine Anlage zur Verwaltung und Steuerung der Umweltenergieerzeugung oder eine Anlage zur Verwaltung und Steuerung der Wasserversorgung, der Kanalisation oder von Dämmen handelt.

16. Programm, das Anweisungen enthält, die, wenn das Programm von einem Computer ausgeführt wird, den Computer veranlassen, zu fungieren als:
eine Anzeigesteuereinheit (508), die dazu eingerichtet ist, einen Anzeigebildschirm zum Anzeigen von Daten innerhalb einer Anlage auf der Grundlage von Standardanzeigeeinstellungen anzuzeigen;
eine Erfassungseinheit (509), die dazu eingerichtet ist, einen von einem Benutzer betrachteten Bereich innerhalb des Anzeigebildschirms zu erfassen;
eine Bestimmungseinheit (510), die dazu eingerichtet ist, auf der Grundlage eines Erfassungsergebnisses durch die Erfassungseinheit (509) einen Aufmerksamkeitsgrad für jeden Bereich innerhalb des Anzeigebildschirms zu bestimmen;
eine Erzeugungseinheit (511), die dazu eingerichtet ist, Aktualisierungsanzeigeeinstellungen, die sich von den Standardanzeigeeinstellungen unterscheiden, auf der Grundlage eines Bestimmungsergebnisses durch die Bestimmungseinheit (510) zu erzeugen; und
eine Aktualisierungseinheit (512), die dazu eingerichtet ist, die StandardAnzeigeeinstellungen in die Aktualisierungsanzeigeeinstellungen zu ändern und die Anzeigesteuereinheit (508) zu veranlassen, den Anzeigebildschirm als Reaktion auf die Eingabe eines Aktualisierungsbefehls durch den Benutzer zu aktualisieren, wobei das Programm dazu eingerichtet ist, dass es weiterhin den Computer veranlasst, zu fungieren als:
eine Beurteilungseinheit (503), die dazu eingerichtet ist, einen Zustand der Anlage zu beurteilen, und
eine Speichereinheit (506), die dazu eingerichtet ist, die Standardanzeigeeinstellungen für jeden Zustand der Anlage zu speichern, wobei
jedes Mal, wenn sich der Zustand der Anlage ändert, die Anzeigesteuereinheit (508) dazu eingerichtet ist, den Anzeigebildschirm auf der Grundlage der Standardanzeigeeinstellungen anzuzeigen, die dem Zustand nach der Änderung entsprechen,
wobei es sich bei der Anlage um eine Industrieanlage, eine Anlage zur Verwaltung und Steuerung von Brunnen und deren Umgebung, eine Anlage zur Verwaltung und Steuerung der Energieerzeugung, eine Anlage zur Verwaltung und Steuerung der Umweltenergieerzeugung oder eine Anlage zur Verwaltung und Steuerung der Wasserversorgung, der Kanalisation oder von Dämmen handelt.

17. Computerlesbares Aufzeichnungsmedium, das das Programm nach Anspruch 16 speichert.

## Revendications

1. Appareil, comprenant :
une unité de commande d'affichage (508) configurée pour afficher un écran d'affichage pour afficher des données à l'intérieur d'une installation, sur la base de paramètres d'affichage par défaut ;
une unité de détection (509) configurée pour détecter une région observée par un utilisateur dans l'écran d'affichage ;
une unité de détermination (510) configurée pour déterminer un degré d'attention de chaque région dans l'écran d'affichage sur la base d'un résultat de détection par l'unité de détection (509) ;
une unité de génération (511) configurée pour générer des paramètres d'affichage mis à jour différents des paramètres d'affichage par défaut sur la base d'un résultat de détermination par l'unité de détermination (510) ; et
une unité de mise à jour (512) configurée pour modifier les paramètres d'affichage par défaut en paramètres d'affichage mis à jour et amener l'unité de commande d'affichage (508) à mettre à jour l'écran d'affichage en réponse à l'entrée d'une instruction de mise à jour par l'utilisateur, dans lequel l'appareil comprend en outre :
une unité de jugement (503) configurée pour juger d'un état de l'installation, et
une unité de stockage (506) configurée pour stocker les paramètres d'affichage par défaut pour chaque état de l'installation, dans lequel
à chaque fois que l'état de l'installation change, l'unité de commande d'affichage (508) est configurée pour afficher l'écran d'affichage sur la base des paramètres d'affichage par défaut correspondant à l'état après changement,
dans lequel l'installation est l'une quelconque d'une installation industrielle, d'une installation qui gère et commande des puits et leurs alentours, d'une installation qui gère et commande la production d'énergie, d'une installation qui gère et commande la production d'énergie environnementale, ou d'une installation qui gère et commande de l'approvisionnement en eau, de l'assainissement ou des barrages.

2. Appareil selon la revendication 1, dans lequel
l'unité de détermination (510) est configurée pour déterminer, pour chaque état de l'installation, le degré d'attention de chaque région dans l'écran d'affichage des paramètres d'affichage par défaut correspondant audit état,
l'unité de génération (511) est configurée pour générer les paramètres d'affichage mis à jour correspondant à un état actuel de l'installation sur la base du degré d'attention de chaque région dans l'écran d'affichage des paramètres d'affichage par défaut correspondant audit état, et
l'unité de mise à jour (512) est configurée pour définir les paramètres d'affichage mis à jour en tant que paramètres d'affichage par défaut correspondant à l'état actuel de l'installation en réponse à l'entrée de l'instruction de mise à jour.

3. Appareil selon la revendication 2, dans lequel
l'unité de jugement (503) est configurée pour juger si l'installation est dans un état normal ou dans un état anormal, et
lorsque l'état actuel de l'installation est dans l'état normal, l'unité de génération (511) est configurée pour générer les paramètres d'affichage mis à jour correspondant à l'état normal sur la base du degré d'attention de chaque région dans l'écran d'affichage des paramètres d'affichage par défaut correspondant à l'état normal et du degré d'attention de chaque région dans l'écran d'affichage des paramètres d'affichage par défaut correspondant à l'état anormal.

4. Appareil selon la revendication 3, dans lequel
l'unité de génération (511) est configurée pour générer les paramètres d'affichage mis à jour correspondant à l'état normal, de sorte qu'une visibilité de données affichées dans une région avec un degré d'attention plus élevé qu'une référence dans l'écran d'affichage des paramètres d'affichage par défaut correspondant à l'état anormal ne diminue pas, en changeant au moins l'une parmi une position d'affichage, une couleur d'affichage, une luminosité ou une taille d'affichage d'une région d'affichage desdites données ; ou une modification de caractère, une couleur d'affichage ou une taille d'affichage du texte desdites données.

5. Appareil selon la revendication 3 ou 4, dans lequel
l'unité de jugement (503) est configurée pour juger que l'installation est dans l'état anormal en réponse à la génération d'un signal d'alerte dans l'installation.

6. Appareil selon l'une quelconque des revendications 1 à 5, comprenant en outre :
une unité d'identification (505) configurée pour identifier, parmi une pluralité d'utilisateurs, un utilisateur actuel qui utilise actuellement ledit appareil, dans lequel l'unité de stockage (506) est configurée pour stocker les paramètres d'affichage par défaut pour chacun des utilisateurs, dans lequel
à chaque fois que l'utilisateur actuel est changé, l'unité de commande d'affichage (508) est configurée pour afficher l'écran d'affichage sur la base des paramètres d'affichage par défaut correspondant à l'utilisateur actuel après changement.

7. Appareil selon la revendication 6, dans lequel
l'unité de détermination (510) est configurée pour déterminer, pour chaque utilisateur, le degré d'attention de chaque région dans l'écran d'affichage des paramètres d'affichage par défaut correspondant audit utilisateur,
l'unité de génération (511) est configurée pour générer les paramètres d'affichage mis à jour correspondant à l'utilisateur actuel sur la base du degré d'attention de chaque région dans l'écran d'affichage des paramètres d'affichage par défaut correspondant audit utilisateur actuel, et
l'unité de mise à jour (512) est configurée pour définir les paramètres d'affichage mis à jour en tant que paramètres d'affichage par défaut correspondant à l'utilisateur actuel en réponse à l'entrée de l'instruction de mise à jour.

8. Appareil selon la revendication 7, dans lequel
lorsque l'utilisateur actuel est un premier utilisateur, l'unité de génération (511) est configurée pour générer les paramètres d'affichage mis à jour correspondant audit premier utilisateur sur la base du degré d'attention de chaque région dans l'écran d'affichage des paramètres d'affichage par défaut correspondant audit premier utilisateur et du degré d'attention de chaque région dans l'écran d'affichage des paramètres d'affichage par défaut correspondant à un second utilisateur.

9. Appareil selon la revendication 8, dans lequel
lorsque l'utilisateur actuel est le premier utilisateur, l'unité de génération (511) est configurée pour générer les paramètres d'affichage mis à jour correspondant au premier utilisateur, de sorte qu'une visibilité de données affichées dans une région avec un degré d'attention plus élevé qu'une référence dans l'écran d'affichage des paramètres d'affichage par défaut correspondant au second utilisateur ne diminue pas, en changeant au moins l'une parmi une position d'affichage, une couleur d'affichage, une luminosité ou une taille d'affichage d'une région d'affichage desdites données ; ou une modification de caractère, une couleur d'affichage ou une taille d'affichage du texte desdites données.

10. Appareil selon l'une quelconque des revendications 6 à 9, comprenant en outre :
une unité de capture d'image (504) configurée pour capturer une image d'un oeil de l'utilisateur, dans lequel
l'unité d'identification (505) est configurée pour identifier l'utilisateur actuel par reconnaissance d'iris de l'œil qui a été capturé en image par l'unité de capture d'image (504).

11. Appareil selon l'une quelconque des revendications 6 à 9, comprenant en outre :
une unité d'entrée (501) configurée pour recevoir une entrée d'informations d'authentification provenant d'un utilisateur, dans lequel
l'unité d'identification (505) est configurée pour identifier l'utilisateur actuel sur la base des informations d'authentification.

12. Appareil selon l'une quelconque des revendications 1 à 11, dans lequel
l'unité de génération (511) est configurée pour générer les paramètres d'affichage mis à jour, de sorte qu'une visibilité de données affichées dans une région avec un degré élevé d'attention augmente, en changeant au moins l'une parmi une position d'affichage, une couleur d'affichage, une luminosité ou une taille d'affichage d'une région d'affichage desdites données ; ou une modification de caractère, une couleur d'affichage ou une taille d'affichage du texte desdites données.

13. Appareil selon l'une quelconque des revendications 1 à 12, dans lequel
l'unité de détermination (510) détermine en outre un degré de pertinence entre des régions dans l'écran d'affichage sur la base du résultat de détection par l'unité de détection (509), et
l'unité de génération (511) est configurée pour générer les paramètres d'affichage mis à jour en associant des régions présentant un degré élevé de pertinence les unes avec les autres.

14. Appareil selon l'une quelconque des revendications 1 à 13, dans lequel
l'unité de mise à jour (512) est configurée pour
afficher l'écran d'affichage sur la base des paramètres d'affichage mis à jour et un message pour sélectionner s'il faut effectuer une mise à jour de l'écran d'affichage, et en réponse à la sélection d'effectuer la mise à jour, modifier les paramètres d'affichage par défaut en les paramètres d'affichage mis à jour et amener l'unité de commande d'affichage (508) à mettre à jour l'écran d'affichage.

15. Procédé, comprenant :
une étape de commande d'affichage consistant à afficher un écran d'affichage pour afficher des données dans une installation, sur la base de paramètres d'affichage par défaut ;
une étape de détection consistant à détecter une région observée par un utilisateur dans l'écran d'affichage ;
une étape de détermination consistant à déterminer un degré d'attention de chaque région dans l'écran d'affichage sur la base d'un résultat de détection par l'étape de détection ;
une étape de génération consistant à générer des paramètres d'affichage mis à jour différents des paramètres d'affichage par défaut sur la base d'un résultat de détermination par l'étape de détermination ; et
une étape de mise à jour consistant à modifier les paramètres d'affichage par défaut en les paramètres d'affichage mis à jour et à amener l'étape de commande d'affichage à mettre à jour l'écran d'affichage en réponse à une entrée d'une instruction de mise à jour par un utilisateur, dans lequel le procédé comprend en outre :
une étape de jugement d'un état de l'installation, et
une étape de stockage consistant à stocker les paramètres d'affichage par défaut pour chaque état de l'installation, dans lequel
l'étape de commande d'affichage comprend, à chaque fois que l'état de l'installation change, l'affichage de l'écran d'affichage sur la base des paramètres d'affichage par défaut correspondant à l'état après changement,
dans lequel l'installation est l'une quelconque d'une installation industrielle, d'une installation qui gère et commande des puits et leurs alentours, d'une installation qui gère et commande la production d'énergie, d'une installation qui gère et commande la production d'énergie environnementale, ou d'une installation qui gère et commande de l'approvisionnement en eau, de l'assainissement ou des barrages.

16. Programme comprenant des instructions qui, lorsque le programme est exécuté par un ordinateur, amènent l'ordinateur à fonctionner comme :
une unité de commande d'affichage (508) configurée pour afficher un écran d'affichage pour afficher des données à l'intérieur d'une installation, sur la base de paramètres d'affichage par défaut ;
une unité de détection (509) configurée pour détecter une région observée par un utilisateur dans l'écran d'affichage ;
une unité de détermination (510) configurée pour déterminer un degré d'attention de chaque région dans l'écran d'affichage sur la base d'un résultat de détection par l'unité de détection (509) ;
une unité de génération (511) configurée pour générer des paramètres d'affichage mis à jour différents des paramètres d'affichage par défaut sur la base d'un résultat de détermination par l'unité de détermination (510) ; et
une unité de mise à jour (512) configurée pour modifier les paramètres d'affichage par défaut en paramètres d'affichage mis à jour et amener l'unité de commande d'affichage (508) à mettre à jour l'écran d'affichage en réponse à l'entrée d'une instruction de mise à jour par l'utilisateur, dans lequel le programme est configuré pour amener en outre l'ordinateur à fonctionner comme :
une unité de jugement (503) configurée pour juger d'un état de l'installation, et
une unité de stockage (506) configurée pour stocker les paramètres d'affichage par défaut pour chaque état de l'installation, dans lequel
à chaque fois que l'état de l'installation change, l'unité de commande d'affichage (508) est configurée pour afficher l'écran d'affichage sur la base des paramètres d'affichage par défaut correspondant à l'état après changement,
dans lequel l'installation est l'une quelconque d'une installation industrielle, d'une installation qui gère et commande des puits et leurs alentours, d'une installation qui gère et commande la production d'énergie, d'une installation qui gère et commande la production d'énergie environnementale, ou d'une installation qui gère et commande de l'approvisionnement en eau, de l'assainissement ou des barrages.

17. Support d'enregistrement lisible par ordinateur stockant le programme selon la revendication 16.
